# EUROPEAN PATENT SPECIFICATION

(11) **EP 3 696 470 B1**
(45) Date of publication and mention of the grant of the patent: **24.05.2023**
(21) Application number: 17928594.5
(22) Date of filing: 11.10.2017
(51) Int. Cl.: F24F 11/30, F24F 11/49, F24F 11/526, F24F 11/64, F24F 11/65, F24F 11/89, B60R 16/037, G10L 15/22, G10L 17/08, F24F 120/10, F24F 120/20

(54) **AIR CONDITIONING CONTROLLER**
KLIMATISIERUNGSSTEUERGERÄT
DISPOSITIF DE COMMANDE DE CLIMATISATION

(43) Date of publication of application: 19.08.2020
(73) Proprietor: Mitsubishi Electric Corporation, Chiyoda-ku Tokyo 100-8310 (JP)
(72) Inventor: TAJIMA, Yuki, Tokyo 102-0073 (JP); KATAYAMA, Kazuyuki, Tokyo 102-0073 (JP)
(74) Representative: Pfenning, Meinig & Partner mbB
(86) International application number: PCT/JP2017/036876
(87) International publication number: WO 2019/073558

(56) References cited:
- WO-A1-2007/145331
- CN-A- 107 023 952
- JP-A- H09 145 123
- JP-A- 2010 091 228
- JP-A- 2015 108 464
- JP-A- 2017 108 767
- KR-A- 20070 030 411
- US-A1- 2013 099 011
- US-A1- 2017 234 562

## Description

### Field

The present invention relates to an air-conditioner controller that controls an operation of an air conditioner.

### Background

Conventionally, there have been some air conditioners performing air-conditioning control on the basis of an air-conditioning condition preferred by a user. Patent Literature 1 discloses a technique in which an air conditioner detects a voice uttered by a user to identify the user, and performs air-conditioning control on the basis of a stored air-conditioning condition preferred by the user. The air conditioner described in Patent Literature 1 can store air-conditioning conditions preferred by two or more users.

### Citation List

### Patent Literature

Patent Literature 1: Japanese Patent Application Laid-open No. 2010-91228

### Summary

### Technical Problem

However, according to the above-described conventional technique, the air conditioner described in Patent Literature 1 identifies a user by comparing a voiceprint of a detected user's voice with a voiceprint in stored voice data for each user, and therefore, when there are two or more sets of voice data having similar voiceprints, the user may be possibly misrecognized. The air conditioner described in Patent Literature 1 has a problem that when a user is misrecognized, air-conditioning control cannot be performed on the basis of an air-conditioning condition preferred by the user.

The present invention has been made in view of the above circumstances, and an object thereof is to provide an air-conditioner controller capable of improving an accuracy of recognizing a user.

### Solution to Problem

In order to solve the above-described problem and achieve the object, the present invention provides an air-conditioner controller according to claim 1 that controls an operation of an air conditioner. The air-conditioner controller comprises: a storage unit to store, for each user, voiceprint data that is data indicating a voiceprint of a user, and personal data that is data indicating a feature of a user; and a control unit to compare voice data that is data of a voice of a user detected in an air-conditioning area that is an area subject to air-conditioning control of the air conditioner with the voiceprint data, and to, when there is voiceprint data similar to the voice data, present a question based on the personal data to identify a user in the air-conditioning area on the basis of an answer acquired from the user in the air-conditioning area.

### Advantageous Effects of Invention

The air-conditioner controller according to the present invention achieves an effect of improving an accuracy of recognizing a user.

### Brief Description of Drawings

FIG. 1 is a diagram illustrating an example configuration of an air-conditioning system according to a first embodiment.
FIG. 2 is a diagram illustrating an example configuration of an air-conditioner controller according to the first embodiment.
FIG. 3 is a flowchart illustrating an operation of storing voiceprint data and personal data of a user in the air-conditioner controller according to the first embodiment.
FIG. 4 is a flowchart illustrating an air-conditioning control operation of the air-conditioner controller according to the first embodiment.
FIG. 5 is a diagram illustrating an example in which a processing circuit included in the air-conditioner controller according to the first embodiment is configured with a processor and a memory.
FIG. 6 is a diagram illustrating an example in which the processing circuit included in the air-conditioner controller according to the first embodiment is configured with dedicated hardware.
FIG. 7 is a flowchart illustrating an air-conditioning control operation of the air-conditioner controller according to a second embodiment.
FIG. 8 is a flowchart illustrating an air-conditioning control operation of the air-conditioner controller according to a third embodiment.

### Description of Embodiments

Hereinafter, an air-conditioner controller according to embodiments of the present invention will be described in detail with reference to the drawings. The present invention is not necessarily limited by the embodiments.

### First Embodiment.

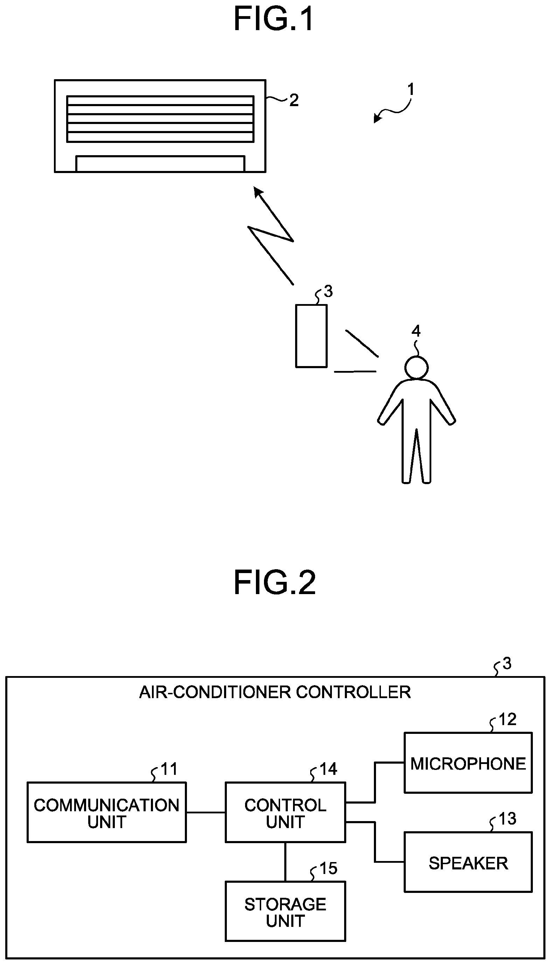

FIG. 1 is a diagram illustrating an example configuration of an air-conditioning system 1 according to a first embodiment of the present invention. The air-conditioning system 1 includes an air conditioner 2 and an air-conditioner controller 3. The air conditioner 2 controls air conditioning in an air-conditioning area that is an area to be subjected to air-conditioning control. The air conditioning is the act of adjusting air temperature, humidity, airflow, and the like to be comfortable for a user 4 in the air-conditioning area described above. Although only an indoor unit is illustrated in FIG. 1, the air conditioner 2 also includes an outdoor unit (not illustrated). The air-conditioner controller 3 is a controller that controls an operation of the air conditioner 2. Specifically, the air-conditioner controller 3 receives an operation from the user 4 and instructs the air conditioner 2 on an air-conditioning control content. The user 4 receives air conditioning from the air conditioner 2 in the air-conditioning area of the air conditioner 2.

FIG. 2 is a diagram illustrating an example configuration of the air-conditioner controller 3 according to the first embodiment. The air-conditioner controller 3 includes a communication unit 11, a microphone 12, a speaker 13, a control unit 14, and a storage unit 15. In the air-conditioner controller 3 illustrated in FIG. 2, a configuration necessary for detecting a voice of the user 4 and controlling the operation of the air conditioner 2 is illustrated. Although not illustrated in FIG. 2, the air-conditioner controller 3 may include a display unit that displays an operating state of the air conditioner 2 and an input unit that receives a manual operation from the user 4.

The communication unit 11 transmits an air-conditioning control content determined by the control unit 14 to the air conditioner 2. The microphone 12 detects a voice uttered by the user 4, converts the detected voice into an electrical signal, and outputs the electrical signal to the control unit 14. The speaker 13 converts the electrical signal inputted from the control unit 14 into a sound and outputs the sound. The control unit 14 determines an air-conditioning control content of the air conditioner 2 and controls the operation of the air conditioner 2.

The storage unit 15 stores voiceprint data and personal data for each user. The voiceprint data is data indicating voiceprints of users. The voiceprint data may be formed to include information on a user's accent as well as information on frequency components of a user's voice. The personal data is data indicating features of individual users. The personal data includes, but not limited to, information such as name, gender, and age of each user as the data indicating features of individual users. The personal data also includes information indicating a characteristic with respect to temperature as the features of individual users. The characteristic with respect to temperature is, for example, information indicating that the user is "sensitive to cold" or "sensitive to heat". The personal data may include air-conditioning control contents in the past for the air conditioner 2, which have been set by the user. The user's set air-conditioning control contents in the past for the air conditioner 2 may be average values of set temperatures and average values of set humidities for the air conditioner 2 in several previous operations, or may be a set temperature and a set humidity for the air conditioner 2 at the last operation.

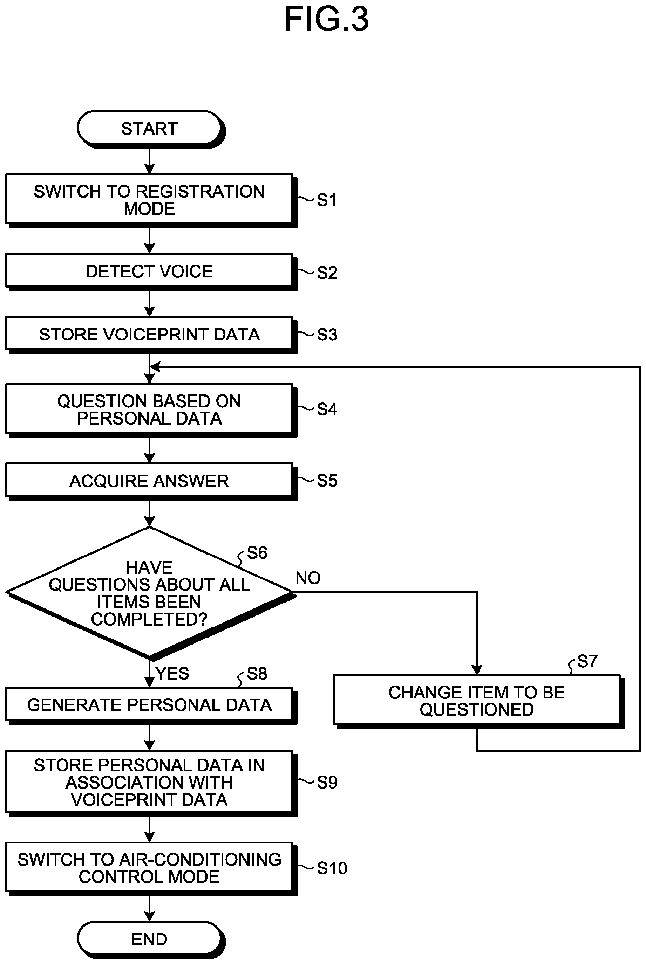

Next, an operation of the air-conditioner controller 3 will be described. In the first embodiment, before normal air-conditioning control is performed in the air-conditioning system 1, the user 4 is supposed to register, that is, store the voiceprint data and the personal data in the air-conditioner controller 3 in advance. FIG. 3 is a flowchart illustrating an operation of storing the voiceprint data and the personal data of the user 4 in the air-conditioner controller 3 according to the first embodiment. Here, the air-conditioner controller 3 has two operation modes, one of which is an air-conditioning control mode for performing normal air-conditioning control, and another of which is a registration mode for registering voiceprint data and personal data. In the air-conditioner controller 3, the control unit 14 switches the operation mode of the air-conditioner controller 3 from the air-conditioning control mode to the registration mode (Step S1). The control unit 14 may perform the switching to the registration mode when detecting a voice stating "registration mode" from the user 4 via the microphone 12, or may perform the switching to the registration mode by operation of an input unit (not illustrated in FIG. 2) capable of performing switching between the air-conditioning control mode and the registration mode. The above-described input unit includes a change-over switch and a button. The control unit 14 detects a voice uttered by the user 4 via the microphone 12 (Step S2), and stores data of the detected voice of the user 4 in the storage unit 15 as voiceprint data of the user 4 (Step S3).

The control unit 14 presents questions based on items of the personal data to the user 4 via the speaker 13 (Step S4). As described above, the personal data includes name, gender, age, a characteristic with respect to temperature, and the like. The control unit 14 presents, to the user 4 via the speaker 13, questions based on the items that should be registered as the personal data. Examples of the questions include "Could you tell me your name?", "Are you a man?", "Are you a woman?", "How old are you?", "Are you sensitive to heat?", and "Are you sensitive to cold?". The control unit 14 presents one question for each item of the personal data to the user 4 via the speaker 13 and acquires an answer from the user 4 via the microphone 12 (Step S5). If there is an item of the personal data that is not used to question to the user 4 (Step S6: No), the control unit 14 changes the item to be questioned (Step S7) and repeats the operations of Steps S4 and S5. If the questions about all items of the personal data have been completed for the user 4 (Step S6: Yes), the control unit 14 generates personal data of the user 4 using the answers acquired from the user 4 (Step S8). The control unit 14 stores the generated personal data of the user 4 in the storage unit 15 in association with the voiceprint data of the user 4 described above (Step S9).

The control unit 14 switches the operation mode from the registration mode to the air-conditioning control mode (Step S10). The control unit 14 may perform the switching to the air-conditioning control mode when detecting a voice stating "air-conditioning control mode" from the user 4 via the microphone 12, or may perform the switching to the air-conditioning control mode by operation of the input unit described above. The control unit 14 may automatically perform the switching to the air-conditioning control mode after storing the voiceprint data and the personal data of the user 4 in the storage unit 15.

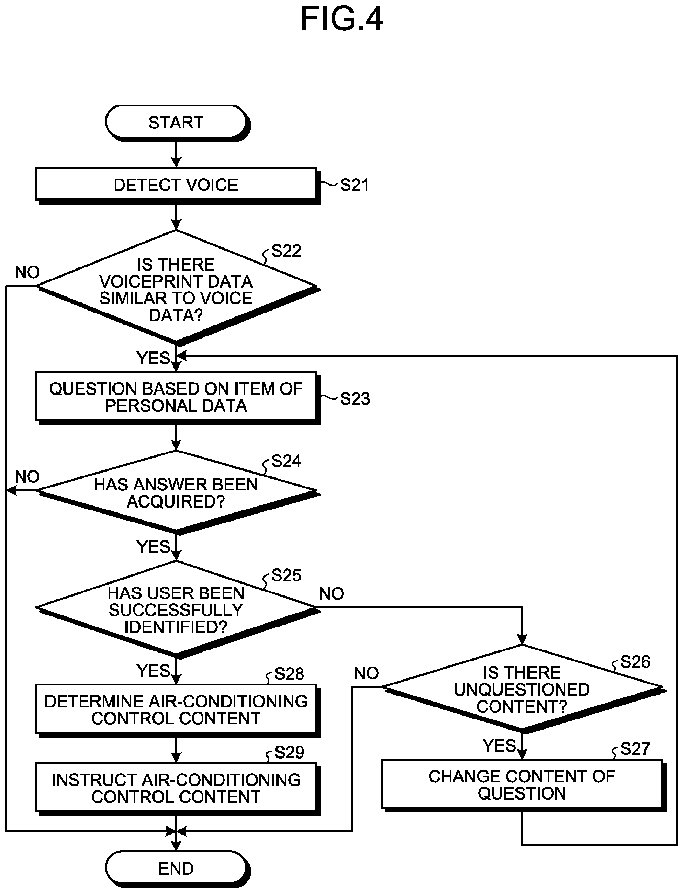

Next, an air-conditioning control operation of the air-conditioner controller 3 will be described. FIG. 4 is a flowchart illustrating the air-conditioning control operation of the air-conditioner controller 3 according to the first embodiment. In the air-conditioner controller 3, the control unit 14 detects a voice uttered by the user 4 present in the air-conditioning area of the air conditioner 2 via the microphone 12 (Step S21). Specifically, when the microphone 12 detects the voice of the user 4, the microphone 12 converts the detected voice into an electrical signal and outputs the electrical signal to the control unit 14. The control unit 14 detects the voice uttered by the user 4 based on the electrical signal inputted from the microphone 12. The electrical signal inputted to the control unit 14 is voice data that is data of the voice uttered by the user 4. The reason why the voice of the user 4 is detected in Step S21 is that the control unit 14 has to recognize that the user 4 is in the air-conditioning area of the air conditioner 2. For this reason, the content of the voice, that is, words uttered by the user 4 may not necessarily be related to the air-conditioning control.

The control unit 14 compares the voice data of the user 4 that is the electrical signal inputted from the microphone 12 with the voiceprint data stored in the storage unit 15, and determines whether there is voiceprint data similar to the voice data of the user 4 (Step S22). Regarding a method of determining whether or not the voice data of the user 4 and voiceprint data are similar to each other, examples thereof include, but not limited to, methods using comparison of frequency components, comparison of pitches, and the like, and a general method may be used. For example, when the probability that the voice data of the user 4 and voiceprint data represent that the fact that they are relevant to the same person is equal to or greater than a predetermined value, it is determined that the voice data of the user 4 is similar to the voiceprint data. When two or more sets of voiceprint data are stored in the storage unit 15, the control unit 14 sequentially extracts the voiceprint data sets and performs determination about the similarity on all sets of the voiceprint data.

If there has been found voiceprint data similar to the voice data of the user 4 (Step S22: Yes), the control unit 14 presents a question based on an item of the personal data to the user 4 (Step S23). When the air conditioner 2 is installed in an ordinary family house and users of the air conditioner 2 are family members who are residents of the house, the voiceprints of the users, that is, the family members may be similar. When there are two or more residents in the air-conditioning area of the air conditioner 2, it is expected that the control unit 14 detects two or more sets of voiceprint data similar to the voice data of the user 4 in the operation of Step S22. Therefore, the control unit 14 presents a question based on an item of the personal data to the user 4 and acquires an answer from the user 4, thereby identifying, among users whose voiceprint data and personal data are stored, a user to which the user 4 corresponds. By so doing, the control unit 14 can improve the accuracy of identifying the user 4, that is, the recognition accuracy. For example, it is assumed that voiceprint data and personal data of two or more users are stored in the storage unit 15, there are three sets of voiceprint data similar to the voice data on the user 4, and names "A", "B", and "C" are stored as personal data of the users stored in association with their respective voiceprint data sets. The control unit 14 puts a question of "Are you Mr. or Ms. A?" to the user 4 via the speaker 13. When there is one set of voiceprint data similar to the voice data and the user can be identified, the control unit 14 may put a question such as "Hello, Mr. B?" to the user 4 via the speaker 13 to perform simple confirmation of identity of the user only.

If an answer has been acquired from the user 4 via the microphone 12 (Step S24: Yes), the control unit 14 determines whether or not the user 4 has been successfully identified on the basis of the answer acquired from the user 4 (Step S25). If the user 4 has not been successfully identified (Step S25: No), the control unit 14 checks whether or not there is a content that has not been questioned to the user 4 (Step S26). If there is the not-questioned content (Step S26: Yes), the control unit 14 changes the content of the question (Step S27), and presents a question based on an item of the personal data to the user 4 (Step S23). For example, if an answer of "No" has been acquired from the user 4 to the question of "Are you Mr. or Ms. A?" (Step S24: Yes), the user 4 has not been successfully identified (Step S25: No), and then, because there is the not-questioned content (Step S26: Yes), the control unit 14 changes the content of the question to "Are you Mr. B?" (Step S27), and returns to Step S23 to perform similar operations.

If the user 4 has been successfully identified (Step S25: Yes), the control unit 14 extracts the personal data of the identified user 4 from the storage unit 15, determines an air-conditioning control content of the air conditioner 2 using the personal data of the identified user 4 (Step S28), and instructs the air conditioner 2 on the air-conditioning control content via the communication unit 11 (Step S29). For example, if an answer of "Yes" has been acquired to the question of "Are you Mr. B?" (Step S24: Yes), the user 4 has been successfully identified (Step S25: Yes), and therefore the control unit 14 determines the air-conditioning control content of the air conditioner 2 on the basis of his characteristic with respect to temperature among the personal data of the user whose name is "B" (Step S28). For example, when the characteristic with respect to temperature is "sensitive to cold", the control unit 14 sets a temperature that is higher than a preset standard set temperature which has been set in advance, by a specified value. When the characteristic with respect to temperature is "sensitive to heat", the control unit 14 sets a temperature that is lower than the preset standard set temperature which has been set in advance, by a specified value. The control unit 14 may beforehand store actual set temperature and set humidity set on the basis of the characteristic with respect to temperature in the personal data as previous air-conditioning control contents. Even after Step S29, that is, when the air conditioner 2 performs air-conditioning control on the basis of the instruction from the air-conditioner controller 3, the user 4 may instruct the air-conditioner controller 3 on a desired air-conditioning control content via the input unit or the like. In that case, the control unit 14 beforehand stores the actual set temperature and set humidity actually set in response to the instruction from the user 4 in the personal data as previous air-conditioning control contents.

If there has been found no voiceprint data similar to the voice data of the user 4 (Step S22: No), and if there is no not-questioned content for the user 4 (Step S26: No), the user 4 has not been successfully identified, and therefore, the control unit 14 ends the air-conditioning control operation. In a case where there has been no answer acquired from the user 4 (Step S24: No), the control unit 14 ends the air-conditioning control operation because there is a possibility that the user 4 is not present in the air-conditioning area in the first place. The case where there has been no answer acquired from the user 4 (Step S24: No) is, for example, a case where the voice detected in Step S21 is a reproduction of recorded data having the voice of the user 4 recorded therein, and the user 4 himself or herself is not present in the air-conditioning area, so that the control unit 14 has not been able to acquire a voice assumed as an answer to the question.

When detecting the voices of two or more users in Step S21, the control unit 14 puts a question of "How many people are present?" to the user 4 who is in the air-conditioning area via the speaker 13. When an answer of "two" or more has been acquired from the user 4, the control unit 14 ends the air-conditioning control using the voiceprint data and the personal data, and receives an operation mode, a set temperature, a set humidity, and the like from the user 4 to perform general air-conditioning control.

Next, a hardware configuration of the air-conditioner controller 3 will be described. In the air-conditioner controller 3, the communication unit 11 is a transmitter and a receiver that perform wireless communication. The microphone 12 is a device that converts a sound into an electrical signal. The speaker 13 is a device that converts an electrical signal into a sound. The storage unit 15 is a memory. The control unit 14 is realized by a processing circuit. That is, the air-conditioner controller 3 includes a processing circuit for identifying the user 4 who has uttered a voice and controlling the operation of the air conditioner 2. The processing circuit may be a processor that executes a program stored in a memory and the memory, or may be a dedicated hardware set.

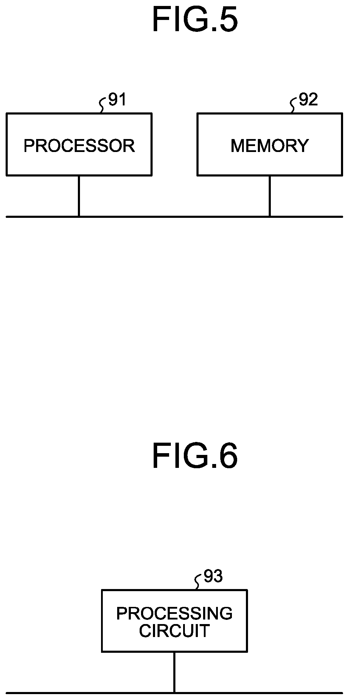

FIG. 5 is a diagram illustrating an example in which the processing circuit included in the air-conditioner controller 3 according to the first embodiment is configured with the processor and the memory. When the processing circuit is configured with a processor 91 and a memory 92, functions of the processing circuit of the air-conditioner controller 3 are realized by software, firmware, or any combination of software and firmware. The software or the firmware is described as a program and stored in the memory 92. In the processing circuit, the processor 91 reads and executes the program stored in the memory 92, thereby realizing the functions. That is, the processing circuit includes the memory 92 for storing programs with which the identification of the user 4 who has uttered a voice and the control of the operation of the air conditioner 2 are executed as a result. It can also be said that these programs cause a computer to execute procedures and methods for the air-conditioner controller 3.

Here, the processor 91 may be a central processing unit (CPU), a processing device, an arithmetic device, a microprocessor, a microcomputer, a digital signal processor (DSP), or the like. The memory 92 corresponds to, for example, a non-volatile or volatile semiconductor memory such as a random access memory (RAM), a read only memory (ROM), a flash memory, an erasable programmable ROM (EPROM), or an electrically EPROM (EEPROM (registered trademark)), a magnetic disk, a flexible disk, an optical disk, a compact disc, a mini disk, or a digital versatile disc (DVD). A memory for the storage unit 15 may be the same as the memory 92.

FIG. 6 is a diagram illustrating an example in which the processing circuit included in the air-conditioner controller 3 according to the first embodiment is configured with dedicated hardware. When the processing circuit is configured with dedicated hardware, the processing circuit 93 illustrated in FIG. 6 corresponds to, for example, a single circuit, a composite circuit, a programmed processor, a parallel programmed processor, an application specific integrated circuit (ASIC), a field programmable gate array (FPGA), or any combination of them. Functions of the air-conditioner controller 3 may be separately realized in units of the function by the processing circuit 93, or the functions may be collectively realized by the processing circuit 93.

Some of the functions of the air-conditioner controller 3 may be realized by dedicated hardware and the remainder thereof may be realized by software or firmware. Thus, the processing circuit can realize each of the above-described functions by dedicated hardware, software, or firmware, or any combination thereof.

As described above, according to the present embodiment, in the air-conditioner controller 3, the control unit 14 detects a voice uttered by the user 4, and when one or more sets of voiceprint data similar to the voiceprint of the user 4 are stored, the control unit 14 puts, to the user 4, a question based on the personal data stored in association with the voiceprint data, and identifies the user 4 on the basis of an answer to the question obtained from the user 4. Thus, the control unit 14 can improve the recognition accuracy when recognizing the user 4 by voice.

In addition, the control unit 14 determines an air-conditioning control content of the air conditioner 2 using the personal data stored for the identified user 4, and instructs the air conditioner 2 on the determined air-conditioning control content. Thus, the control unit 14 can perform air-conditioning control that suits the preference of the user 4.

### Second Embodiment.

In the first embodiment, the control unit 14 determines the air-conditioning control content of the air conditioner 2 using the personal data of the user 4. However, it is also contemplated that the content of the air-conditioning control currently desired by the user 4 does not match the content of the personal data. In the first embodiment, when the personal data of the user 4 is corrected, it is necessary to use the registration mode because the correction cannot be performed in the air-conditioning control mode. In a second embodiment, the personal data of the user 4 is easily corrected to make it possible to provide the air-conditioning control currently desired by the user 4. Differences from the first embodiment will be described below.

The configuration of the air-conditioning system 1 and the configuration of the air-conditioner controller 3 according to the second embodiment are similar to the configurations of those in the first embodiment illustrated in FIGS. 1 and 2. The same applies to the operation of the flowchart illustrated in FIG. 3 in which the voiceprint data and the personal data are stored in advance in the air-conditioner controller 3.

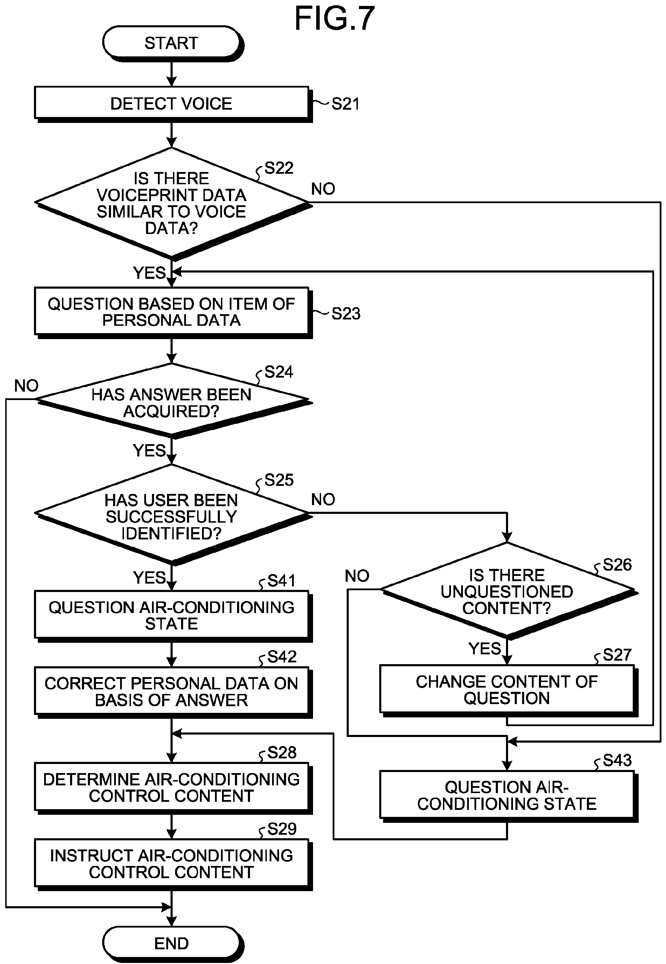

FIG. 7 is a flowchart illustrating an air-conditioning control operation of the air-conditioner controller 3 according to the second embodiment. In FIG. 7, the operations of Steps S21 to S29 are much the same as those in the first embodiment illustrated in the flowchart of FIG. 4. In the second embodiment, if the user has been successfully identified (Step S25: Yes), the control unit 14 presents a question about an air-conditioning state to the user 4 (Step S41). For example, the control unit 14 presents a question such as "Is the room hot, Mr. B?", "Is the room cold, Mr. B?", or "Is the room humid, Mr. B?" to the user 4 via the speaker 13. When the control unit 14 acquires an answer to the question from the user 4 via the microphone 12, the control unit 14 corrects the personal data of the user 4 on the basis of the acquired answer (Step S42). In a case where the information on the previous air-conditioning control contents is stored as the personal data as described above, when an answer of "It is hot" is acquired from the user 4, the control unit 14 sets, as a new set temperature, a temperature that is lower than the current set temperature by a specified degree of temperature, and corrects the previous air-conditioning control contents using the new set temperature. The control unit 14 performs the operations of Steps S28 and S29 after the operation of Step S42.

If there has been found no voiceprint data similar to the voice data of the user 4 (Step S22: No), and if there is no not-questioned content to the user 4 (Step S26: No), the user 4 has not been successfully identified, and therefore, the control unit 14 presents a question about the air-conditioning control contents to the user 4 (Step S43). The content of the operation of Step S43 is similar to that of Step S41 described above. The control unit 14 performs the operations of Steps S28 and S29 after the operation of Step S43. Thus, even for the user 4 who has not been successfully identified, the control unit 14 presents a question about the air-conditioning control content to the user 4 to thereby make it possible to acquire a request of the user 4 and accordingly perform the air-conditioning control. Since the control unit 14 has no information on the user 4 in Step S43, the control unit 14 may present more questions than the question presented in Step S41 to acquire a desire of the user 4. If there has been no answer acquired from the user 4 (Step S24: No), the control unit 14 ends the air-conditioning control operation similarly to the first embodiment.

As described above, according to the present embodiment, the control unit 14 corrects the personal data of the user, determines the air-conditioning control content of the air conditioner 2 using the corrected personal data, and instructs the air conditioner 2 on the determined air-conditioning control content. Thus, the control unit 14 can perform air-conditioning control that more appropriately suits a current desire of the user 4 as compared with the first embodiment.

In addition, the control unit 14 presents a question about the air-conditioning control content to the user 4 whose voiceprint data and personal data are not registered and the user 4 who has not been successfully identified, and performs air-conditioning control on the basis of an answer acquired from the user 4. Thus, the control unit 14 can increase the chances of performing air-conditioning control for the user 4 as compared with the first embodiment.

### Third Embodiment.

In the first and second embodiments, it is necessary to register, that is, store the user's voiceprint data and personal data in the air-conditioner controller 3 in advance in the registration mode. In a third embodiment, the control unit 14 can store the user's voiceprint data and personal data in the storage unit 15 in the air-conditioning control mode that is a mode in the process of normal air-conditioning control, in addition to the registration mode. Differences from the first and second embodiments will be described.

The configuration of the air-conditioning system 1 and the configuration of the air-conditioner controller 3 according to the third embodiment are much the same as the configurations of those in the first and second embodiments illustrated in FIGS. 1 and 2.

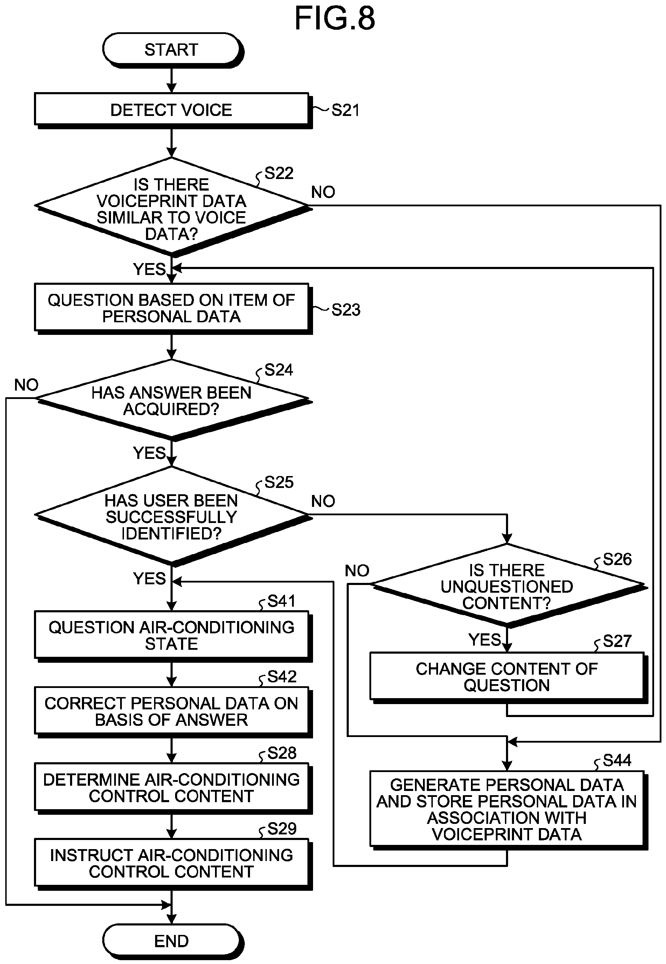

FIG. 8 is a flowchart illustrating an air-conditioning control operation of the air-conditioner controller 3 according to the third embodiment. In FIG. 8, the operations of Steps S21 to S29, S41, and S42 are similar to those in the second embodiment illustrated in the flowchart of FIG. 7. In the third embodiment, if there has been found no voiceprint data similar to the voice data of the user 4 (Step S22: No), and if there is no not-questioned content to the user 4 (Step S26: No), that is, if the user 4 has not been successfully identified, the control unit 14 generates personal data of the user 4, regards the voice data of the user 4 as voiceprint data, and associates the voiceprint data with the personal data to store the voiceprint data and the personal data in the storage unit 15 (Step S44). The detailed operation of Step S44 is similar to the operations of Steps S2 to Step S9 illustrated in the flowchart of FIG. 3 of the first embodiment. The operation of Step S2 may be replaced with the operation of Step S21. The control unit 14 performs the operation of Step S41 after the operation of Step S44. Subsequent operations therefrom are similar to those of the second embodiment.

As described above, according to the present embodiment, the control unit 14 can store voiceprint data and personal data in the normal air-conditioning control mode for the user 4 who has not been successfully identified. Thereby, even for the user 4 whose voiceprint data and personal data are not registered in advance in the registration mode, the control unit 14 can register his or her voiceprint data and personal data and perform the air-conditioning control that suits the preference of the user 4.

The configurations described above in the embodiments are merely examples of the content of the present invention, and can be combined with other publicly known techniques and partially omitted and/or modified without departing from the scope of the present invention which is solely defined by the appended claims.

### Reference Signs List

1 air-conditioning system; 2 air conditioner; 3 air-conditioner controller; 4 user; 11 communication unit; 12 microphone; 13 speaker; 14 control unit; 15 storage unit.

## Claims

1. An air-conditioner controller (3) configured to control an operation of an air conditioner (2), the air-conditioner controller (3) comprising:
a microphone (12) configured to detect a voice of a user in an air-conditioning area that is an area subject to air-conditioning control of the air conditioner (2);
a storage unit (15) configured to store, for each user, voiceprint data that is data indicating a voiceprint of a user, data of the detected voice of the user, and personal data that is data indicating a feature of a user; and
a control unit (14) configured to compare voice data that is data of a voice detected in the air-conditioning area with the voiceprint data,
**characterized in that** the control unit (14) is further configured to, when there is voiceprint data similar to the voice data, present a question based on the personal data to identify a user in the air-conditioning area on the basis of an answer acquired from the user in the air-conditioning area.

2. The air-conditioner controller (3) according to claim 1, wherein
the personal data includes information indicating a characteristic with respect to temperature, and
the control unit (14) is configured to determine an air-conditioning control content of the air conditioner (2) using personal data of an identified user, and is configured to instruct the air conditioner (2) on the air-conditioning control content.

3. The air-conditioner controller (3) according to claim 2, wherein
the control unit (14) is configured to
present a question about an air-conditioning state to the identified user,
correct the personal data of the identified user on the basis of an answer acquired from the identified user,
determine an air-conditioning control content of the air conditioner (2) using the corrected personal data, and
instruct the air conditioner (2) on the air-conditioning control content.

4. The air-conditioner controller (3) according to claim 3, wherein
in a case where a user in the air-conditioning area has not been successfully identified, the control unit (14) is configured to
present a question based on an item of the personal data to the user in the air-conditioning area,
generate personal data of the user in the air-conditioning area on the basis of an answer acquired from the user in the air-conditioning area,
use voice data of the user in the air-conditioning area for voiceprint data, and
store the voiceprint data and the personal data in the storage unit (15).

## Patentansprüche

1. Klimatisierungssteuerungseinheit (3), die eingerichtet ist, einen Betrieb einer Klimaanlage (2) zu steuern, wobei die Klimatisierungssteuerungseinheit (3) aufweist:
ein Mikrofon (12), das eingerichtet ist, eine Stimme eines Benutzers in einem Klimatisierungsbereich, der ein Bereich ist, der Klimatisierungssteuerung der Klimaanlage (2) unterliegt, zu erfassen;
eine Speichereinheit (15), die eingerichtet ist, für jeden Benutzer Stimmabdruckdaten, welche Daten sind, die einen Stimmabdruck eines Benutzers anzeigen, Daten der erfassten Stimme des Benutzers und personenbezogene Daten, welche Daten sind, die ein Merkmal eines Benutzers anzeigen, zu speichern; und
eine Steuerungseinheit (14), die eingerichtet ist, Stimmdaten, welche Daten einer in dem Klimatisierungsbereich erfassten Stimme sind, mit den Stimmabdruckdaten zu vergleichen,
**dadurch gekennzeichnet, dass** die Steuerungseinheit (14) ferner eingerichtet ist, bei Vorliegen von Stimmabdruckdaten, die den Stimmdaten ähnlich sind, eine Frage basierend auf den personenbezogenen Daten zu präsentieren, um einen Benutzer im Klimatisierungsbereich auf der Grundlage einer von dem Benutzer im Klimatisierungsbereich erworbenen Antwort zu identifizieren.

2. Klimatisierungssteuerungseinheit (3) nach Anspruch 1, wobei
die personenbezogenen Daten Informationen enthalten, die eine Charakteristik in Bezug auf Temperatur anzeigen, und
die Steuerungseinheit (14) eingerichtet ist, einen Klimatisierungssteuerungsinhalt der Klimaanlage (2) unter Verwendung personenbezogener Daten eines identifizierten Benutzers zu bestimmen, und eingerichtet ist, die Klimaanlage (2) über den Klimatisierungssteuerungsinhalt zu instruieren.

3. Klimatisierungssteuerungseinheit (3) nach Anspruch 2, wobei die Steuerungseinheit (14) eingerichtet ist:
dem identifizierten Benutzer eine Frage zu einem Klimatisierungszustand zu präsentieren,
die personenbezogenen Daten des identifizierten Benutzers auf der Grundlage einer von dem identifizierten Benutzer erworbenen Antwort zu korrigieren,
einen Klimatisierungssteuerungsinhalt der Klimaanlage (2) unter Verwendung der korrigierten personenbezogenen Daten zu bestimmen, und
die Klimaanlage (2) über den Klimatisierungssteuerungsinhalt zu instruieren.

4. Klimatisierungssteuereinheit (3) nach Anspruch 3, wobei
in einem Fall, in dem ein Benutzer im Klimatisierungsbereich nicht erfolgreich identifiziert wurde, die Steuerungseinheit (14) eingerichtet ist:
dem Benutzer im Klimatisierungsbereich eine Frage basierend auf einem Element der personenbezogenen Daten zu präsentieren,
personenbezogene Daten des Benutzers im Klimatisierungsbereich auf der Grundlage einer vom Benutzer im Klimatisierungsbereich erworbenen Antwort zu generieren,
Stimmdaten des Benutzers im Klimatisierungsbereich für Stimmabdruckdaten zu nutzen, und
die Stimmabdruckdaten und die personenbezogenen Daten in der Speichereinheit (15) zu speichern.

## Revendications

1. Contrôleur de climatiseur (3) configuré de manière à commander le fonctionnement d'un climatiseur (2), le contrôleur de climatiseur (3) comprenant :
un microphone (12) configuré de manière à détecter la voix d'un utilisateur dans une zone de climatisation, laquelle est une zone soumise à une commande de climatisation du climatiseur (2) ;
une unité de stockage (15) configurée de manière à stocker, pour chaque utilisateur, des données d'empreinte vocale qui correspondent à des données indiquant l'empreinte vocale d'un utilisateur, des données de la voix détectée de l'utilisateur, et des données personnelles qui correspondent à des données indiquant une caractéristique d'un utilisateur ; et
une unité de commande (14) configurée de manière à comparer des données vocales, lesquelles correspondent à des données d'une voix détectée dans la zone de climatisation, aux données d'empreinte vocale ;
**caractérisé en ce que** l'unité de commande (14) est en outre configurée de manière à, lorsqu'il existe des données d'empreinte vocale similaires aux données vocales, présenter une question basée sur les données personnelles, afin d'identifier un utilisateur dans la zone de climatisation sur la base d'une réponse obtenue auprès de l'utilisateur dans la zone de climatisation.

2. Contrôleur de climatiseur (3) selon la revendication 1, dans lequel :
les données personnelles incluent des informations indiquant une caractéristique relative à une température ; et
l'unité de commande (14) est configurée de manière à déterminer un contenu de commande de climatisation du climatiseur (2) en utilisant des données personnelles d'un utilisateur identifié, et est configurée de manière à donner des instructions au climatiseur (2) quant au contenu de commande de climatisation.

3. Contrôleur de climatiseur (3) selon la revendication 2, dans lequel :
l'unité de commande (14) est configurée de manière à :
présenter, à l'utilisateur identifié, une question concernant un état de climatisation ;
corriger les données personnelles de l'utilisateur identifié, sur la base d'une réponse obtenue auprès de l'utilisateur identifié ;
déterminer un contenu de commande de climatisation du climatiseur (2) en utilisant les données personnelles corrigées ; et
donner des instructions au climatiseur (2) quant au contenu de commande de climatisation.

4. Contrôleur de climatiseur (3) selon la revendication 3, dans lequel :
dans le cas où un utilisateur dans la zone de climatisation n'a pas été correctement identifié, l'unité de commande (14) est configurée de manière à :
présenter une question basée sur un élément des données personnelles, à l'utilisateur dans la zone de climatisation ;
générer des données personnelles de l'utilisateur dans la zone de climatisation, sur la base d'une réponse obtenue auprès de l'utilisateur dans la zone de climatisation ;
utiliser des données vocales de l'utilisateur dans la zone de climatisation pour des données d'empreinte vocale ; et
stocker les données d'empreinte vocale et les données personnelles dans l'unité de stockage (15).
